(19) Europäisches Patentamt
European Patent Office
Office européen des brevets

(11) **EP 3 862 563 B1**

(12) **FASCICULE DE BREVET EUROPEEN**

(45) Date de publication et mention de la délivrance du brevet:
**13.09.2023 Bulletin 2023/37**

(21) Numéro de dépôt: **21154246.9**

(22) Date de dépôt: **29.01.2021**

(51) Classification Internationale des Brevets (IPC):
**F03D 17/00** (2016.01)

(52) Classification Coopérative des Brevets (CPC):
**F03D 17/00;** F05B 2270/32; F05B 2270/8042;
Y02E 10/72

(54) **PROCEDE DE DETERMINATION DE LA DIRECTION DU VENT AU MOYEN D'UN CAPTEUR DE TELEDETECTION PAR LASER**

VERFAHREN ZUR BESTIMMUNG DER WINDRICHTUNG MITHILFE EINES LASERFERNERKENNUNGSSENSORS

METHOD FOR DETERMINING THE DIRECTION OF THE WIND BY MEANS OF A LASER REMOTE DETECTION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2020 FR 2001278**

(43) Date de publication de la demande:
**11.08.2021 Bulletin 2021/32**

(73) Titulaire: **IFP Energies nouvelles**
**92500 Rueil-Malmaison (FR)**

(72) Inventeurs:
• GUILLEMIN, Fabrice
92852 RUEIL-MALMAISON CEDEX (FR)
• NGUYEN, Hoai-Nam
92852 RUEIL-MALMAISON CEDEX (FR)

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 581 762     WO-A1-2018/234409**

• **Ienkaran Arasaratnam: "Cubature Kalman Filtering: Theory & Applications", , 1 avril 2009 (2009-04-01), pages 1-150, XP055736914, Extrait de l'Internet: URL:https://macsphere.mcmaster.ca/bitstream/11375/17242/1/Arasaratnam%20Ienkaran.pdf [extrait le 2020-10-06]**
• **P. TOWERS ET AL: "Real-time wind field reconstruction from LiDAR measurements using a dynamic wind model and state estimation : LiDAR wind field estimation", WIND ENERGY, vol. 19, no. 1, 21 novembre 2014 (2014-11-21), pages 133-150, XP055451329, GB ISSN: 1095-4244, DOI: 10.1002/we.1824**

## Description

### Domaine technique

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) et/ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine (le rotor) dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels qu'un système de contrôle des pales à angle variable ou un système de contrôle des freins aérodynamiques ;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

### Technique antérieure

Pour optimiser le contrôle, il est important de connaître la vitesse du vent au niveau du rotor de l'éolienne. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent ou de connaître la direction du vent.

Selon une deuxième technique, on peut utiliser un capteur LIDAR (acronyme de l'expression en langue anglaise « light détection and ranging » pouvant être traduite par télédétection par Laser). Le LIDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LIDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LIDAR est annoncé comme étant un capteur indispensable au bon fonctionnement des grandes éoliennes, tout particulièrement alors que leur taille et leur puissance augmentent (aujourd'hui, 5 MW, bientôt 12 MW en offshore). Ce capteur permet la mesure à distance du vent, permettant dans un premier temps de calibrer les éoliennes pour qu'elle puissent fournir une puissance maximum (optimisation de la courbe de puissance). Pour cette étape de calibration, le capteur peut être positionné au sol et orienté verticalement (« profiler »), ce qui permet de mesurer la vitesse de vent et sa direction, ainsi que le gradient de vent selon les altitudes. Cette application est tout particulièrement critique puisqu'elle permet de connaître la ressource productrice d'énergie. Ceci est important pour les projets éoliens, puisque cela conditionne la fiabilité financière du projet. Toutefois, cette méthode peut paraître onéreuse, car elle nécessite un capteur LIDAR placé fixement sur le sol ou la mer et orienté verticalement, en plus du capteur LIDAR placé sur l'éolienne pour l'application décrite ci-dessous.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LIDAR en estimant précisément la vitesse du vent au niveau du rotor, c'est-à-dire dans le plan du rotor. Une telle application est décrite notamment dans la demande de brevet FR 3013777 (US 2015145253) et dans la demande de brevet WO 2018/234409.

Le développement d'un tel capteur LIDAR étant relativement récent, il est encore difficile de savoir en transformant les mesures brutes du capteur LIDAR, comment exploiter les caractéristiques du champ de vent telles que la vitesse du vent, la direction du vent, le cisaillement du vent, la turbulence, le facteur d'induction, etc. En particulier, la détermination de la direction du vent est importante pour le contrôle et le diagnostic de l'éolienne. Cette détermination de la direction du vent doit être fiable, robuste, et en temps réel.

**Résumé de l'invention**

Le but du procédé selon l'invention est de déterminer, de manière fiable, robuste et en temps réel, la direction du vent. Dans ce but, la présente invention concerne un procédé de détermination de la direction du vent au moyen d'un capteur LIDAR. Pour ce procédé, on réalise des mesures au moyen du capteur LIDAR, on en déduit une distribution gaussienne des composantes longitudinale et transversale de la vitesse du vent, puis, on détermine la direction du vent au moyen d'une méthode d'approximation de la cubature sphérique et au moyen de la distribution gaussienne des composantes longitudinale et transversale de la vitesse du vent. La méthode d'approximation de la cubature sphérique permet de déterminer la direction du vent en temps réel, car elle est rapide : elle nécessite peu de calculs, et des calculs peu complexes, contrairement notamment à la méthode de Monte Carlo qui ne convient pas aux problèmes d'estimation en temps réel.

L'invention concerne un procédé de détermination de la direction du vent au moyen d'un capteur LIDAR placé sur une éolienne, dans lequel on met en oeuvre les étapes suivantes :

a) On réalise des mesures du vent au moyen dudit capteur LIDAR dans au moins un plan de mesure en amont de ladite éolienne, ledit plan de mesure étant perpendiculaire à la direction de mesure dudit capteur LIDAR ;
b) On détermine une distribution gaussienne des composantes longitudinale et transversale de la vitesse du vent au moyen desdites mesures, ladite composante longitudinale correspondant à la direction de mesure du capteur LIDAR, et ladite composante transversale correspondant à une direction perpendiculaire à la direction de mesure du capteur LIDAR; et
c) On détermine en temps réel ladite direction du vent au moyen de ladite distribution gaussienne déterminée desdites composantes longitudinale et transversale de la vitesse du vent par une méthode d'approximation de la cubature sphérique..

Selon un mode de réalisation de l'invention, on détermine ladite distribution gaussienne desdites composantes longitudinale et transversale de la vitesse du vent au moyen d'un estimateur de champ de vent.

Avantageusement, ledit procédé détermine en outre l'écart type de ladite direction du vent. Conformément à une mise en oeuvre, ladite approximation de la cubature sphérique met en oeuvre cinq réalisations stochastiques issues de ladite distribution gaussienne desdites composantes longitudinale et transversale de la vitesse du vent.

Selon un aspect, on détermine ladite direction du vent au moyen de la méthode d'approximation de la cubature sphérique en mettant en oeuvre les étapes suivantes :

i) On détermine des réalisations stochastiques de ladite distribution gaussienne desdites composantes longitudinale $u_j$ et transversale $v_j$ de la vitesse du vent, avec i variant de -2 à 2, de telle sorte que

$$\begin{cases} \begin{bmatrix} u_0(k) \\ v_0(k) \end{bmatrix} = \begin{bmatrix} \hat{u}(k) \\ \hat{v}(k) \end{bmatrix}, \\ \begin{bmatrix} u_{\pm 1}(k) \\ v_{\pm 1}(k) \end{bmatrix} = \begin{bmatrix} \hat{u}(k) \\ \hat{v}(k) \end{bmatrix} \pm \sqrt{2}\delta_1 S_1, \\ \begin{bmatrix} u_{\pm 2}(k) \\ v_{\pm 2}(k) \end{bmatrix} = \begin{bmatrix} \hat{u}(k) \\ \hat{v}(k) \end{bmatrix} \pm \sqrt{2}\delta_2 S_2 \end{cases}$$

avec

$$P(k) = S\Sigma S^T$$

$$\Sigma = \begin{bmatrix} \delta_1^2 & 0 \\ 0 & \delta_2^2 \end{bmatrix},$$

$$P(k) = \delta_1^2 S_1 S_1^T + \delta_2^2 S_2 S_2^T$$

, $\hat{u}$ et $\hat{v}$ étant les valeurs estimées de u et de v, P(k) étant la matrice de covariance de ladite distribution gaussienne, S et $\Sigma$ étant les matrices obtenues à partir de la décomposition en valeurs singulières de la matrice de covariance P(k), $S_1$ et $S_2$ étant les colonnes de la matrice S;

ii) Pour chaque réalisation stochastique j, on détermine la direction du vent $\theta_j$ au moyen de l'équation suivante:

$$\theta_j(k) = \arctan\left(\frac{v_j(k)}{u_j(k)}\right)$$ ; et

iii) On détermine la direction du vent $\hat{\theta}$ au moyen de l'équation suivante: $$\hat{\theta}(k) = \sum_{j=-2}^{2} w_j \theta_j(k)$$ avec $\omega_j$ des pondérations desdites réalisations stochastiques.

De préf"rence, on détermine l'écart-type $\hat{\sigma}$ de ladite direction du vent $\hat{\theta}$ au moyen de l'équation suivante:

$$\hat{\sigma}(k) = \sqrt{\sum_{j=-2}^{2} w_j(\theta_j(k) - \hat{\theta}(k))^2}$$ .

De manière avantageuse, lesdites pondérations $\omega_j$ sont définies de la manière suivante :

$$\begin{cases} w_0 = \frac{1}{3}, \\ w_j = \frac{1}{6}, \ \forall j = \{-2, -1, 1, 2\} \end{cases}$$

L'invention concerne également un procédé de contrôle d'une éolienne équipée d'un capteur LIDAR. Pour ce procédé, on met en oeuvre les étapes suivantes :

a) on détermine ladite direction du vent en amont de l'éolienne au moyen du procédé selon l'une des caractéristiques précédentes ; et
b) on contrôle ladite éolienne en fonction de ladite direction du vent en amont de ladite éolienne.

De plus, l'invention concerne un produit programme d'ordinateur comprenant des instructions de code agencés pour mettre en oeuvre les étapes d'un procédé selon l'une des caractéristiques précédentes, lorsque le programme est exécuté sur une unité de traitement dudit capteur LIDAR.

En outre, l'invention concerne un capteur LIDAR pour éolienne comprenant une unité de traitement mettant en oeuvre un procédé selon l'une des caractéristiques précédentes. L'invention concerne également une éolienne comportant un capteur LIDAR selon l'une des caractéristiques précédentes, ledit capteur LIDAR étant de préférence placé sur la nacelle de ladite éolienne ou dans le nez de ladite éolienne.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre une éolienne équipée d'un capteur LIDAR selon un mode de réalisation de l'invention.

La figure 2 illustre les étapes du procédé de détermination de la direction du vent selon un mode de réalisation de l'invention.

La figure 3 illustre la composante longitudinale de la vitesse du vent en fonction du temps pour un exemple de réalisation.

La figure 4 illustre la composante transversale de la vitesse du vent en fonction du temps pour l'exemple de la figure 3.

La figure 5 illustre la direction du vent en fonction du temps pour l'exemple des figures 3 et 4, au moyen d'un mode de réalisation du procédé selon l'invention, et au moyen d'une méthode de Monte Carlo.

## Description des modes de réalisation

La présente invention concerne un procédé de détermination de la direction du vent au moyen d'un capteur LIDAR. On appelle direction du vent, l'angle formé par la direction du vent par rapport à la direction de mesure du capteur LIDAR. La direction de mesure du capteur LIDAR est également appelée direction longitudinale.

Selon l'invention, le capteur LIDAR permet de mesurer la vitesse du vent sur au moins un plan de mesure en amont de l'éolienne, par rapport à la circulation du vent. Il existe plusieurs types de capteur LIDAR, par exemple les capteurs LIDAR scannés, LIDAR continus ou LIDAR pulsés. Dans le cadre de l'invention, on utilise de préférence un LIDAR pulsé. Cependant, les autres technologies de LIDAR peuvent être utilisées tout en restant dans le cadre de l'invention.

Le capteur LIDAR permet une mesure rapide. Par conséquent, l'utilisation d'un tel capteur, permet une détermination rapide, en continu et en temps réel, de la direction du vent. Par exemple, le taux d'échantillonnage du capteur LIDAR peut être compris entre 1 et 5Hz (voire plus dans le futur), et peut valoir 4 Hz. De plus, le capteur LIDAR permet d'obtenir des informations relatives au vent en amont de l'éolienne, c'est-à-dire des informations liées au vent qui va arriver sur l'éolienne. Par conséquent, le capteur LIDAR peut être utilisé pour la détermination de la direction du vent.

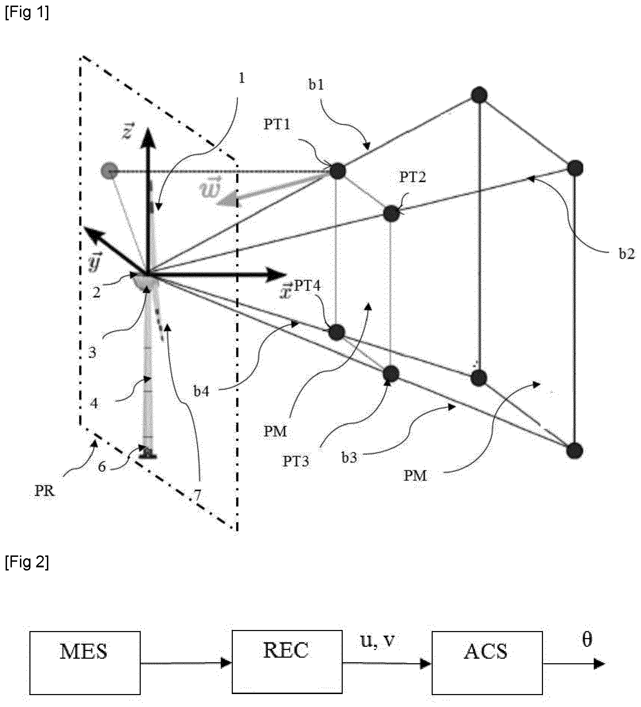

La figure 1 représente, de manière schématique et non limitative, une éolienne 1 à axe horizontal équipée d'un capteur LIDAR 2 pour le procédé selon un mode de réalisation de l'invention. Le capteur LIDAR 2 est utilisé pour mesurer la vitesse du vent à une distance donnée sur une pluralité de plans de mesure PM (seulement deux plans de mesure sont représentés). La connaissance en avance de la mesure du vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LIDAR 2. La direction y, perpendiculaire à la direction x, est la direction latérale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. Le plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

- un mât 4 permettant de placer un rotor (non représenté) à une hauteur suffisante pour permettre son mouvement (nécessaire pour les éoliennes à axe horizontal) et/ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;
- une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine (le rotor) dans la bonne direction ;
- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que'un système de contrôle des pales à angle variable ou un système de contrôle des freins aérodynamiques ;
- une transmission, composée de deux axes (arbre mécanique du rotor et arbre mécanique de la machine électrique) reliés par une transmission (boite de vitesse) (non représentés).

Comme visible à la figure 1, qui est un exemple de réalisation d'un capteur LIDAR pulsé, le capteur LIDAR 2 utilisé comporte quatre faisceaux ou axes de mesures (b1, b2, b3, b4). De manière non limitative, le procédé selon l'invention fonctionne également avec un capteur LIDAR comportant un nombre quelconque de faisceaux. Le capteur LIDAR réalise une mesure ponctuelle en chaque point de mesure (PT1, PT2, PT3, PT4) qui sont des points d'intersection d'un plan de mesure PM et d'un faisceau (b1, b2, b3, b4). Ces points de mesure (PT1, PT2, PT3, PT4) sont représentés par des cercles noirs sur la figure 1. Le traitement des mesures en ces points de mesure (PT1, PT2, PT3, PT4) permet de déterminer la vitesse du vent dans les plans de mesure PM et à plusieurs altitudes : les points de mesure PT1 et PT2 sont à une altitude supérieure à l'altitude des points de mesure PT3 et PT4.

De préférence, le capteur LIDAR 2 peut être monté sur la nacelle 3 de l'éolienne 1, dans le nez de l'éolienne 1, ou directement dans les pales 7.

Selon l'invention, le procédé de détermination de la direction du vent au moyen d'un capteur LIDAR comporte les étapes suivantes :

1) Mesure du vent
2) Détermination des composantes longitudinale et transversale de la vitesse du vent
3) Détermination de la direction du vent

Ces étapes sont réalisées en temps réel. Ces étapes seront détaillées dans la suite de la description.

La figure 2 illustre, schématiquement et de manière non limitative, les étapes du procédé de détermination de la direction du vent selon un mode de réalisation de l'invention. La première étape est une étape de mesure (MES) du vent au moyen du capteur LIDAR. Ensuite, on reconstruit (REC) le champ de vent pour déterminer la distribution gaussienne des composantes longitudinale u et transversale v de la vitesse du vent. Enfin, au moyen d'une méthode d'approximation de cubature sphérique (ACS), on détermine la direction du vent θ à partir de la distribution gaussienne des composantes longitudinale u et transversale v de la vitesse du vent.

### 1) Mesure de la vitesse du vent

Lors de cette étape, on mesure, en continu, la vitesse du vent en au moins un plan de mesure distant de l'éolienne au moyen du capteur LIDAR, en au moins deux points de mesure. Le capteur LIDAR peut permettre de mesurer la vitesse radiale : dans l'axe de chaque faisceau de mesure du capteur LIDAR (correspondant aux faisceaux b1 à b4 de la figure 1). Ainsi, la vitesse du vent peut être connue en amont de l'éolienne en au moins un plan de mesure.

Conformément à une mise en oeuvre de réalisation de l'invention, les plans de mesure peuvent être éloignés d'une distance longitudinale (selon l'axe x de la figure 1) comprise préférentiellement entre 50 et 400 m du plan du rotor. Ainsi, il est possible de déterminer l'évolution de la vitesse du vent sur une longue distance en amont de l'éolienne, ce qui permet également d'augmenter la précision de la détermination de la direction du vent.

Alternativement, les plans de mesure peuvent être plus proches ou plus éloignés que l'intervalle préféré.

Selon un exemple de réalisation non limitatif, le capteur LIDAR peut réaliser des mesures pour dix plans de mesure, notamment ils peuvent être situés respectivement à des distances de 50, 70, 90, 100, 110, 120, 140, 160, 180 et 200 m du plan du rotor.

2) Détermination des composantes longitudinale et transversale de la vitesse du vent

Lors de cette étape, on détermine une distribution gaussienne des composantes longitudinale et transversale de la vitesse du vent au moyen des mesures de l'étape 1). En d'autres termes, on convertit les mesures de la vitesse radiale du vent du capteur LIDAR, en composantes longitudinale et transversale. La composante longitudinale correspond à la direction de mesure du capteur LIDAR (direction x sur la figure 1), et la composante transversale correspond à une direction perpendiculaire à la direction de mesure du capteur LIDAR, c'est-à-dire à une direction parallèle à l'axe y de la figure 1.

Selon un mode de réalisation de l'invention, on peut reconstruire le champ de vent par toute méthode connue, notamment par projection de la vitesse radiale sur l'axe longitudinale, ou de manière non limitative, on peut appliquer notamment un estimateur de champ de vent, pouvant notamment correspondre au procédé de modélisation du vent décrit dans la demande de brevet français FR 3068139 (WO2018/234409), dont on rappelle les principales étapes :

- Maillage de l'espace situé en amont dudit capteur LIDAR, le maillage comprend des points d'estimation et des points de mesure ;
- Mesure de l'amplitude et de la direction du vent aux différents points de mesure ;
- Estimation de l'amplitude et de la direction du vent à un instant quelconque pour l'ensemble des points d'estimation par une méthode des moindres carrés récursifs d'une fonction de coût ; et
- Reconstruction du champ de vent incident en trois dimensions et en temps réel sur l'ensemble des points discrétisés.

On peut noter u(k) et v(k) les composantes longitudinale et transversale estimées de la vitesse du vent, obtenue par toute méthode connue. Le vecteur [u(k) v(k)]$^T$ est une variable aléatoire qui suit une distribution gaussienne avec la moyenne [$\hat{u}(k)$ $\hat{v}(k)$]$^T$ et la matrice de covariance définie positive P(k) (la matrice de covariance P(k) caractérise la quantité de bruit dans les vitesses estimées du vent). On peut alors écrire :

$$\begin{bmatrix} u(k) \\ v(k) \end{bmatrix} \sim \mathcal{N}\left( \begin{bmatrix} \hat{u}(k) \\ \hat{v}(k) \end{bmatrix}, P(k) \right)$$

avec $\mathcal{N}$ la distribution gaussienne. La moyenne et la matrice de covariance sont disponibles à chaque instant, puisqu'ils sont des sorties de la reconstruction du champ de vent, en particulier pour la méthode décrite dans la demande de brevet FR 3068139 (WO2018/234409).

3) Détermination de la direction du vent

Lors de cette étape, il s'agit de déterminer en temps réel la direction du vent au moyen d'une méthode d'approximation de la cubature sphérique appliquée à la distribution gaussienne des composantes longitudinale et transversale de la vitesse du vent obtenue à l'étape 2). Une méthode d'approximation de la cubature sphérique est une méthode numérique qui permet d'approximer une distribution de variables aléatoires avec un nombre limité de points (c'est-à-dire avec un nombre limité de réalisations stochastiques). Une telle méthode est décrite notamment dans le document : I. Arasaratnam, "Cubature kalman filtering theory & applications," Ph.D. dissertation, 2009.. La méthode d'approximation de la cubature sphérique permet de déterminer la direction du vent en temps réel, car elle nécessite peu de calculs, et des calculs peu complexes, contrairement à la méthode de Monte Carlo, qui ne convient pas aux problèmes d'estimation en temps réel en raison d'un temps de calcul important lié au nombre de calculs et à la complexité des calculs.

En outre, pour cette étape, on utilise l'équation suivante qui définit l'angle θ de la direction du vent :

$$\theta = arctan\left(\frac{v}{u}\right)$$ avec u ladite composante longitudinale de la vitesse du vent et v ladite composante transversale de la vitesse du vent.

Selon un mode de réalisation de l'invention, on peut en outre déterminer lors de cette étape l'écart-type de la direction du vent. Ainsi, il est possible de déterminer la robustesse de la détermination de la direction du vent.

Conformément à une mise en oeuvre de l'invention, on peut mettre en oeuvre la méthode d'approximation de la cubature sphérique pour cinq réalisations stochastiques issues de la distribution gaussienne des composantes longitudinale et transversale de la vitesse du vent.

Ainsi, le nombre de calculs est limité, ce qui permet la réalisation de cette étape en temps réel. De plus, ce nombre de réalisations stochastiques permettent une fiabilité de la détermination de la direction du vent par la méthode d'approximation de la cubature sphérique.

Selon un mode de réalisation de l'invention, on peut déterminer ladite direction du vent au moyen de la méthode d'approximation de la cubature sphérique en mettant en oeuvre les étapes suivantes :

i) On détermine des réalisations stochastiques (par exemple cinq réalisations stochastiques) de la distribution gaussienne des composantes longitudinale $u_j$ et transversale $v_j$ de la vitesse du vent, i variant de -2 à 2, de telle sorte que

$$\begin{cases} \begin{bmatrix} u_0(k) \\ v_0(k) \end{bmatrix} = \begin{bmatrix} \hat{u}(k) \\ \hat{v}(k) \end{bmatrix}, \\ \begin{bmatrix} u_{\pm 1}(k) \\ v_{\pm 1}(k) \end{bmatrix} = \begin{bmatrix} \hat{u}(k) \\ \hat{v}(k) \end{bmatrix} \pm \sqrt{2}\delta_1 S_1, \\ \begin{bmatrix} u_{\pm 2}(k) \\ v_{\pm 2}(k) \end{bmatrix} = \begin{bmatrix} \hat{u}(k) \\ \hat{v}(k) \end{bmatrix} \pm \sqrt{2}\delta_2 S_2 \end{cases}$$

avec

$$P(k) = S\Sigma S^T \qquad \Sigma = \begin{bmatrix} \delta_1^2 & 0 \\ 0 & \delta_2^2 \end{bmatrix},$$

$$P(k) = \delta_1^2 S_1 S_1^T + \delta_2^2 S_2 S_2^T$$ , $\hat{u}$ et $\hat{v}$ étant les valeurs estimées de u et de v, P(k) étant la matrice de covariance de la distribution gaussienne des composantes longitudinale et transversale de la vitesse du vent, S et Σ étant les matrices obtenues à partir de la décomposition en valeurs singulières de la matrice de covariance P(k), $S_1$ et $S_2$ étant les colonnes de la matrice S ;

ii) Pour chaque réalisation stochastique j (j variant de - 2 à 2), on détermine la direction du vent $\theta_j$ au moyen de

$$\theta_j(k) = \arctan\left(\frac{v_j(k)}{u_j(k)}\right)$$

l'équation suivante : ; et

$$\hat{\theta}(k) = \sum_{j=-2}^{2} w_j \theta_j(k)$$

iii) On détermine la direction du vent $\hat{\theta}$ au moyen de l'équation suivante : avec $\omega_j$ des pondérations des réalisations stochastiques (en d'autres termes on détermine la direction du vent au moyen d'une moyenne pondérée des directions de vent obtenues pour chaque réalisation stochastique).

Ce mode de réalisation permet une détermination de la direction du vent rapide et simple.

Pour le mode de réalisation pour lequel on détermine en outre l'écart-type $\hat{\sigma}$ de la direction du vent $\hat{\theta}$, on peut mettre en oeuvre l'équation suivante :

$$\hat{\sigma}(k) = \sqrt{\sum_{j=-2}^{2} w_j (\theta_j(k) - \hat{\theta}(k))^2}$$

.

Selon un exemple de réalisation non limitatif, on peut déterminer les pondérations $\omega_j$ au moyen des équations

$$\begin{cases} w_0 = \frac{1}{3}, \\ w_j = \frac{1}{6}, \ \forall j = \{-2, -1, 1, 2\} \end{cases}$$

suivantes : . Ces pondérations permettent une détermination robuste de la direction du vent et éventuellement de l'écart-type de la direction du vent.

Alternativement, d'autres pondérations peuvent être mises en oeuvre.

La présente invention concerne également un procédé de contrôle d'une éolienne équipée d'un capteur LIDAR. Pour ce procédé, on peut mettre en oeuvre les étapes suivantes :

- on détermine la direction du vent en amont de l'éolienne au moyen du procédé de détermination de la direction du vent selon l'une quelconque des variantes ou des combinaisons de variantes décrites ci-dessus ; et

- on contrôle l'éolienne en fonction de la direction du vent en amont de l'éolienne.

La prédiction précise et en temps réel de la direction du vent en amont de l'éolienne permet un contrôle adapté de l'éolienne, en termes de minimisation des effets sur la structure de l'éolienne et de maximisation de la puissance récupérée. En effet, au moyen de ce contrôle, le LIDAR permet d'anticiper la direction du vent qui va arriver sur l'éolienne par ces prédictions et ainsi d'adapter les équipements de l'éolienne en avance de phase pour qu'au moment où le vent estimé arrive, l'éolienne soit dans la configuration optimale pour ce vent. D'autre part, le capteur LIDAR permet de réduire les charges sur la structure, dont les pales et le mât représentent environ 54% du coût. Par conséquent, l'utilisation d'un capteur LIDAR permet d'optimiser la structure de l'éolienne, et donc de diminuer les coûts et la maintenance.

Conformément à une mise en oeuvre de l'invention, on peut commander l'angle d'inclinaison des pales et/ou le couple électrique de récupération du générateur de l'éolienne en fonction de la vitesse du vent et de la direction du vent et/ou l'orientation de la nacelle. De préférence, on peut commander l'angle d'inclinaison individuel des pales. D'autres types de dispositif de régulation peuvent être utilisés. Le contrôle d'inclinaison des pales permet d'optimiser la récupération d'énergie en fonction du vent incident sur les pales.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

La présente invention concerne également un procédé de surveillance et/ou diagnostic d'une éolienne équipée d'un capteur LIDAR. Pour ce procédé, on peut mettre en oeuvre les étapes suivantes :

- on détermine la direction du vent en amont de l'éolienne au moyen du procédé de détermination de la direction du vent selon l'une quelconque des variantes ou des combinaisons de variantes décrites ci-dessus ; et

- on surveille et/ou on diagnostique le fonctionnement de l'éolienne en fonction de la direction du vent en amont de l'éolienne.

La surveillance et/ou le diagnostic peut par exemple correspondre à la sollicitation mécanique subie par la structure de l'éolienne en fonction de la direction du vent.

De plus, l'invention concerne un produit programme d'ordinateur, qui comprend des instructions de code agencés pour mettre en oeuvre les étapes d'un des procédés précédemment décrits (procédé de détermination de détermination de la direction du vent, procédé de contrôle). Le programme est exécuté sur une unité de traitement du capteur LIDAR, ou sur tout moyen analogue, lié au capteur LIDAR ou à l'éolienne.

Selon un aspect, la présente invention concerne également un capteur LIDAR pour éolienne, qui comprend une unité de traitement configurée pour mettre en oeuvre un des procédés précédemment décrits (procédé de détermination de la direction du vent, procédé de contrôle).

Conformément à une mise en oeuvre de l'invention, le capteur LIDAR peut être un capteur LIDAR scanné, LIDAR continu ou LIDAR pulsé. De préférence, le capteur LIDAR est un capteur LIDAR pulsé.

L'invention concerne également une éolienne, notamment une éolienne offshore (en mer) ou onshore (sur terre) équipée d'un capteur LIDAR tel que décrit ci-dessus. Selon un mode de réalisation de l'invention, le capteur LIDAR peut être disposé sur la nacelle de l'éolienne ou dans le nez de l'éolienne. Le capteur LIDAR est dirigé de telle sorte à réaliser une mesure du vent en amont de l'éolienne (c'est-à-dire avant l'éolienne et selon son axe longitudinal, désigné par l'axe x sur la figure 1). Selon un mode de réalisation, l'éolienne peut être conforme à l'éolienne illustrée en figure 1.

Pour le mode de réalisation du procédé de contrôle, l'éolienne peut comprendre des moyens de contrôle, par exemple le contrôle de l'angle d'inclinaison (pouvant être traduit par angle de tangage) d'au moins une pale de l'éolienne ou le contrôle du couple électrique, pour mettre en oeuvre de contrôle le procédé selon l'invention.

Comme il va de soi, l'invention ne se limite pas aux seules formes de réalisation des procédés décrits ci-dessus à titre d'exemple, elle embrasse au contraire toutes les variantes de réalisation.

**Exemple**

Les caractéristiques et avantages du procédé selon l'invention apparaîtront plus clairement à la lecture de l'exemple d'application ci-après.

L'exemple met en oeuvre un capteur LIDAR pulsé à quatre faisceaux, installé sur une nacelle d'une éolienne, dont la hauteur du moyeu de la turbine est de 83 m au-dessus du sol, et avec un diamètre de rotor de 80 m. Le capteur LIDAR mesure la vitesse radiale du vent, noté RWS en amont de la turbine. Les vitesse radiales du vent ont été mesurées à des plans de mesures situés à 50, 70, 90, 100, 120, 140, 150, 170, 190 et 200 m en amont de la turbine.

Ces mesures sont introduites dans l'estimateur de champ de vent tel que décrit dans la demande de brevet français FR 3068139 (WO2018/234409). Ainsi, les composantes longitudinale et transversale des vitesses du vent du champ tridimensionnel peuvent être obtenues avec leur matrice de covariance, qui caractérise la quantité de bruit dans les vitesses estimées du vent.

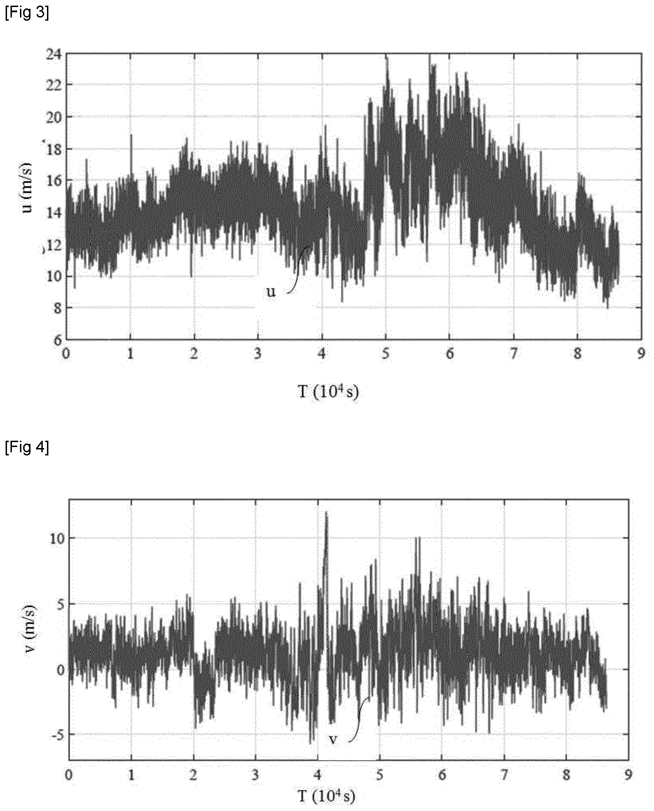

Les figures 3 et 4 illustrent respectivement les composantes longitudinale u en m/s et transversale v en m/s en fonction du temps T en s, pour un des faisceaux du capteur LIDAR pour un plan de mesure situé à 200 m. Les figures 3 et 4 correspondent à un jour de mesures.

Pour cet exemple, on compare le procédé de détermination de la direction du vent en temps réel, à un procédé de détermination de la direction du vent de l'art antérieur et basé sur la méthode de Monte Carlo, qui ne peut pas être mise en oeuvre en temps réel, en raison du nombre importants de calculs, et de la complexité de ces calculs, impliquant une longue durée de calculs.

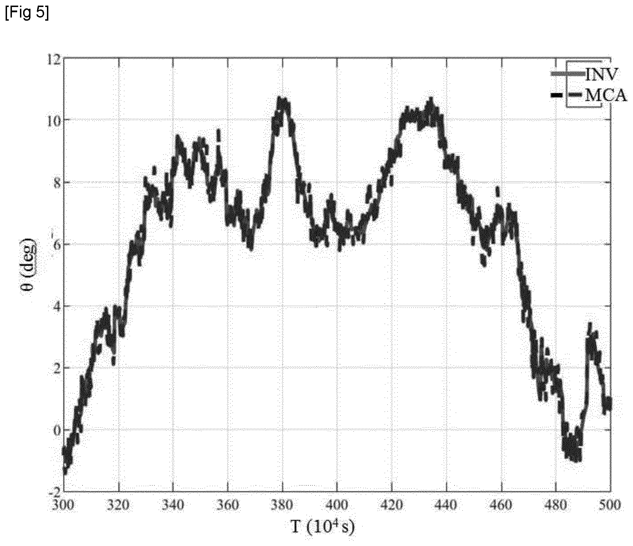

La figure 5 représente à titre illustratif la direction du vent $\theta$ en degrés en fonction du temps T en s, pour le mode de réalisation selon l'invention noté INV et pour une réalisation de l'art antérieur basée sur la méthode de Monte Carlo et notée MCA. On constate que les deux courbes sont superposées. Par conséquent, bien que le procédé selon l'invention utilise moins de calculs que la méthode de l'art antérieur, il permet d'obtenir une précision des résultats équivalente à celle d'une méthode complète et complexe.

**Revendications**

1.　Procédé de détermination de la direction du vent au moyen d'un capteur LIDAR (2) placé sur une éolienne (1), dans lequel on met en oeuvre les étapes suivantes :

a) On réalise des mesures (MES) du vent au moyen dudit capteur LIDAR (2) dans au moins un plan de mesure (PM) en amont de ladite éolienne, ledit plan de mesure (PM) étant perpendiculaire à la direction (x) de mesure dudit capteur LIDAR (2) ;

b) On détermine une distribution gaussienne des composantes longitudinale (u) et transversale (v) de la vitesse du vent au moyen desdites mesures, ladite composante longitudinale (u) correspondant à la direction de mesure du capteur LIDAR (2), et ladite composante transversale (v) correspondant à une direction (y) perpendiculaire à la direction de mesure du capteur LIDAR (2) ; et

c) On détermine en temps réel ladite direction du vent ($\theta$) au moyen de ladite distribution gaussienne déterminée desdites composantes longitudinale (u) et transversale (v) de la vitesse du vent par une méthode d'approximation de la cubature sphérique (ACS).

2. Procédé de détermination de la direction du vent selon la revendication 1, dans lequel on détermine ladite distribution gaussienne desdites composantes longitudinale (u) et transversale (v) de la vitesse du vent au moyen d'un estimateur de champ de vent.

3. Procédé de détermination de la direction du vent selon l'une des revendications précédentes, dans lequel ledit procédé détermine en outre l'écart type de ladite direction du vent.

4. Procédé de détermination de la direction du vent selon l'une des revendications précédentes, dans lequel ladite approximation de la cubature sphérique (ACS) met en oeuvre cinq réalisations stochastiques issues de ladite distribution gaussienne desdites composantes longitudinale et transversale de la vitesse du vent.

5. Procédé de détermination de la direction du vent selon l'une des revendications précédentes, dans lequel on détermine ladite direction du vent ($\theta$) au moyen de la méthode d'approximation de la cubature sphérique en mettant en oeuvre les étapes suivantes :

i) On détermine des réalisations stochastiques de ladite distribution gaussienne desdites composantes longitudinale $u_j$ et transversale $v_j$ de la vitesse du vent, avec i variant de -2 à 2, de telle sorte que

$$\begin{cases} \begin{bmatrix} u_0(k) \\ v_0(k) \end{bmatrix} = \begin{bmatrix} \hat{u}(k) \\ \hat{v}(k) \end{bmatrix}, \\ \begin{bmatrix} u_{\pm 1}(k) \\ v_{\pm 1}(k) \end{bmatrix} = \begin{bmatrix} \hat{u}(k) \\ \hat{v}(k) \end{bmatrix} \pm \sqrt{2}\delta_1 S_1, \\ \begin{bmatrix} u_{\pm 2}(k) \\ v_{\pm 2}(k) \end{bmatrix} = \begin{bmatrix} \hat{u}(k) \\ \hat{v}(k) \end{bmatrix} \pm \sqrt{2}\delta_2 S_2 \end{cases}$$

avec

$$P(k) = S\Sigma S^T$$

$$\Sigma = \begin{bmatrix} \delta_1^2 & 0 \\ 0 & \delta_2^2 \end{bmatrix},$$

$$P(k) = \delta_1^2 S_1 S_1^T + \delta_2^2 S_2 S_2^T$$

, $\hat{u}$ et $\hat{v}$ étant les valeurs estimées de u et de v, P(k) étant la matrice de covariance de ladite distribution gaussienne, S et $\Sigma$ étant les matrices obtenues à partir de la décomposition en valeurs singulières de la matrice de covariance P(k), $S_1$ et $S_2$ étant les colonnes de la matrice S ;

ii) Pour chaque réalisation stochastique j, on détermine la direction du vent $\theta_j$ au moyen de l'équation suivante :

$$\theta_j(k) = \arctan\left(\frac{v_j(k)}{u_j(k)}\right)$$ ; et

iii) On détermine la direction du vent $\hat{\theta}$ au moyen de l'équation suivante : $$\hat{\theta}(k) = \sum_{j=-2}^{2} w_j \theta_j(k)$$ avec $\omega_j$ des pondérations desdites réalisations stochastiques.

6. Procédé de détermination de la direction du vent selon les revendications 3 et 5, dans lequel on détermine l'écart-type $\hat{\sigma}$ de ladite direction du vent $\hat{\theta}$ au moyen de l'équation suivante : $$\hat{\sigma}(k) = \sqrt{\sum_{j=-2}^{2} w_j (\theta_j(k) - \hat{\theta}(k))^2}$$

7. Procédé de détermination de la direction du vent selon l'une des revendications 5 ou 6, dans lequel lesdites pondérations $\omega_j$ sont définies de la manière suivante :

$$\begin{cases} w_0 & = \frac{1}{3}, \\ w_j & = \frac{1}{6}, \ \forall j = \{-2, -1, 1, 2\} \end{cases}$$

8. Procédé de contrôle d'une éolienne (1) équipée d'un capteur LIDAR (2), **caractérisé en ce qu'**on met en oeuvre les étapes suivantes :

   a) on détermine ladite direction du vent en amont de l'éolienne (1) au moyen du procédé selon l'une des revendications précédentes ; et
   b) on contrôle ladite éolienne (1) en fonction de ladite direction du vent en amont de ladite éolienne (1).

9. Produit programme d'ordinateur **caractérisé en ce qu'**il comprend des instructions de code agencés pour mettre en oeuvre les étapes d'un procédé selon l'une des revendications précédentes, lorsque le programme est exécuté sur une unité de traitement dudit capteur LIDAR (2).

10. Capteur LIDAR (2) pour éolienne **caractérisé en ce qu'**il comprend une unité de traitement mettant en oeuvre un procédé selon l'une des revendications 1 à 8.

11. Eolienne (1) **caractérisée en ce qu'**elle comporte un capteur LIDAR (2) selon la revendication 10, ledit capteur LIDAR (2) étant de préférence placé sur la nacelle de ladite éolienne (1) ou dans le nez de ladite éolienne.

## Patentansprüche

1. Verfahren zur Bestimmung der Windrichtung mittels eines auf einer Windkraftanlage (1) angeordneten LIDAR-Sensors (2), wobei die folgenden Schritte durchgeführt werden:

   a) Messungen (MES) des Winds werden mittels des LIDAR-Sensors (2) in mindestens einer der Windkraftanlage vorgelagerten Messebene (PM) durchgeführt, wobei die Messebene (PM) lotrecht zur Messrichtung (x) des LIDAR-Sensors (2) ist;

b) eine Gaußsche Verteilung der Längs- (u) und Querkomponenten (v) der Windgeschwindigkeit wird mittels der Messungen bestimmt, wobei die Längskomponente (u) der Messrichtung des LIDAR-Sensors (2) entspricht, und die Querkomponente (v) einer Richtung (y) lotrecht zur Messrichtung des LIDAR-Sensors (2) entspricht; und c) die Windrichtung (θ) wird mittels der bestimmten Gaußschen Verteilung der Längs- (u) und Querkomponenten (v) der Windgeschwindigkeit durch eine Approximationsmethode der sphärischen Kubatur (ACS) in Echtzeit bestimmt.

2. Verfahren zur Bestimmung der Windrichtung nach Anspruch 1, wobei die Gaußsche Verteilung der Längs- (u) und Querkomponenten (v) der Windgeschwindigkeit mittels einer Windfeld-Schätzeinrichtung bestimmt wird.

3. Verfahren zur Bestimmung der Windrichtung nach einem der vorhergehenden Ansprüche, wobei das Verfahren außerdem die Standardabweichung der Windrichtung bestimmt.

4. Verfahren zur Bestimmung der Windrichtung nach einem der vorhergehenden Ansprüche, wobei die Approximation der sphärischen Kubatur (ACS) fünf stochastische Realisierungen anwendet, die von der Gaußschen Verteilung der Längs- und Querkomponenten der Windgeschwindigkeit stammen.

5. Verfahren zur Bestimmung der Windrichtung nach einem der vorhergehenden Ansprüche, wobei die Windrichtung (θ) mittels der Approximationsmethode der sphärischen Kubatur bestimmt wird, indem die folgenden Schritte durchgeführt werden:

i) es werden stochastische Realisierungen der Gaußschen Verteilung der Längs- $u_j$ und Querkomponenten $v_j$ der Windgeschwindigkeit bestimmt, mit i von -2 bis 2 variierend, so dass

$$\begin{cases} \begin{bmatrix} u_0(k) \\ v_0(k) \end{bmatrix} = \begin{bmatrix} \hat{u}(k) \\ \hat{v}(k) \end{bmatrix}, \\[2ex] \begin{bmatrix} u_{\pm 1}(k) \\ v_{\pm 1}(k) \end{bmatrix} = \begin{bmatrix} \hat{u}(k) \\ \hat{v}(k) \end{bmatrix} \pm \sqrt{2\delta_1} S_1, \\[2ex] \begin{bmatrix} u_{\pm 2}(k) \\ v_{\pm 2}(k) \end{bmatrix} = \begin{bmatrix} \hat{u}(k) \\ \hat{v}(k) \end{bmatrix} \pm \sqrt{2\delta_2} S_2 \end{cases}$$

mit

$$\Sigma = \begin{bmatrix} \delta_1^2 & 0 \\ 0 & \delta_2^2 \end{bmatrix},$$

$$P(k) = S\Sigma S^T,$$

$$P(k) = \delta_1^2 S_1 S_1^T + \delta_2^2 S_2 S_2^T,$$

wobei $\hat{u}$ und $\hat{v}$ die geschätzten Werte von u und v sind, P(k) die Kovarianzmatrix der Gaußschen Verteilung ist, S und $\Sigma$ die ausgehend von der Zerlegung der Kovarianzmatrix P(k) in Einzelwerte erhaltenen Matrizen sind, $S_1$ und $S_2$ die Spalten der Matrix S sind;

ii) für jede stochastische Realisierung j wird die Windrichtung $\theta_j$ mittels der folgenden Gleichung bestimmt:

$$\theta_j(k) = arctan\left(\frac{v_j(k)}{u_j(k)}\right);$$

und

iii) die Windrichtung $\hat{\theta}$ wird mittels der folgenden Gleichung bestimmt:

$$\hat{\theta}(k) = \sum_{j=-2}^{2} w_j \theta_j(k)$$

mit $\omega_j$ Gewichtungen der stochastischen Realisierungen.

**6.** Verfahren zur Bestimmung der Windrichtung gemäß den Ansprüchen 3 und 5, wobei die Standardabweichung $\hat{\sigma}$ der Windrichtung $\theta$ mittels der folgenden Gleichung bestimmt wird:

$$\hat{\sigma}(k) = \sqrt{\sum_{j=-2}^{2} w_j \left( \theta_j(k) - \hat{\theta}(k) \right)^2}$$

**7.** Verfahren zur Bestimmung der Windrichtung nach einem der Ansprüche 5 oder 6, wobei die Gewichtungen $\omega_i$ folgendermaßen definiert werden:

$$\begin{cases} w_0 = \frac{1}{3}, \\ w_j = \frac{1}{6}, \end{cases} \forall_j = \{-2, -1, 1, 2\}$$

**8.** Verfahren zur Steuerung einer mit einem LIDAR-Sensor (2) ausgerüsteten Windkraftanlage (1), **dadurch gekennzeichnet, dass** die folgenden Schritte durchgeführt werden:

a) die Windrichtung stromaufwärts vor der Windkraftanlage (1) wird mittels des Verfahrens nach einem der vorhergehenden Ansprüche bestimmt; und
b) die Windkraftanlage (1) wird abhängig von der Windrichtung stromaufwärts vor der Windkraftanlage (1) gesteuert.

**9.** Computerprogrammprodukt, **dadurch gekennzeichnet, dass** es Codeanweisungen enthält, die eingerichtet sind, um die Schritte eines Verfahrens nach einem der vorhergehenden Ansprüche durchzuführen, wenn das Programm auf einer Verarbeitungseinheit des LIDAR-Sensors (2) ausgeführt wird.

**10.** LIDAR-Sensor (2) für eine Windkraftanlage, **dadurch gekennzeichnet, dass** er eine Verarbeitungseinheit enthält, die ein Verfahren nach einem der Ansprüche 1 bis 8 durchführt.

**11.** Windkraftanlage (1), **dadurch gekennzeichnet, dass** sie einen LIDAR-Sensor (2) nach Anspruch 10 aufweist, wobei der LIDAR-Sensor (2) vorzugsweise auf der Gondel der Windkraftanlage (1) oder in der Nase der Windkraftanlage angeordnet ist.

**Claims**

**1.** Method for determining wind direction by means of a lidar sensor (2) placed on a wind turbine (1), wherein the following steps are implemented:

a) carrying out wind measurements (MES) by means of said lidar sensor (2) in at least one measurement plane (PM) upstream of said wind turbine, said measurement plane (PM) being perpendicular to the measurement direction (x) of said lidar sensor (2);
b) determining a Gaussian distribution of the longitudinal (u) and transverse (v) wind-speed components by means of said measurements, said longitudinal component (u) corresponding to the measurement direction of the lidar sensor (2), and said transverse component (v) corresponding to a direction (y) perpendicular to the measurement direction of the lidar sensor (2); and
c) determining said wind direction ($\theta$) in real time, by means of said determined Gaussian distribution of said longitudinal (u) and transverse (v) wind-speed components, using a method of spherical cubature approximation (SCA).

2. Method for determining wind direction according to Claim 1, wherein said Gaussian distribution of said longitudinal (u) and transverse (v) wind-speed components is determined by means of a wind-field estimator.

3. Method for determining wind direction according to either of the preceding claims, wherein said method further determines the standard deviation of said wind direction.

4. Method for determining wind direction according to one of the preceding claims, wherein said spherical cubature approximation (SCA) employs five stochastic realizations obtained from said Gaussian distribution of said longitudinal and transverse wind-speed components.

5. Method for determining wind direction according to one of the preceding claims, wherein said wind direction ($\theta$) is determined by means of the method of spherical cubature approximation by implementing the following steps:

   i) determining stochastic realizations of said Gaussian distribution of said longitudinal $u_j$ and transverse $v_j$ wind-speed components, with i varying from -2 to 2, such that

$$\begin{cases} \begin{bmatrix} u_0(k) \\ v_0(k) \end{bmatrix} = \begin{bmatrix} \hat{u}(k) \\ \hat{v}(k) \end{bmatrix}, \\ \begin{bmatrix} u_{\pm 1}(k) \\ v_{\pm 1}(k) \end{bmatrix} = \begin{bmatrix} \hat{u}(k) \\ \hat{v}(k) \end{bmatrix} \pm \sqrt{2}\delta_1 S_1, \\ \begin{bmatrix} u_{\pm 2}(k) \\ v_{\pm 2}(k) \end{bmatrix} = \begin{bmatrix} \hat{u}(k) \\ \hat{v}(k) \end{bmatrix} \pm \sqrt{2}\delta_2 S_2 \end{cases}$$

with

$$P(k) = S\Sigma S^T \qquad \Sigma = \begin{bmatrix} \delta_1^2 & 0 \\ 0 & \delta_2^2 \end{bmatrix},$$

$$P(k) = \delta_1^2 S_1 S_1^T + \delta_2^2 S_2 S_2^T$$

$\hat{u}$ and $\hat{v}$ being the estimated values of u and of v, P(k) being the covariance matrix of said Gaussian distribution, S and $\Sigma$ being the matrices obtained from singular value decomposition of the covariance matrix P (k), $S_1$ and $S_2$ being the columns of the matrix S;

ii) for each stochastic realization j, determining the wind direction $\theta_j$ by means of the following equation:

$$\theta_j(k) = arctan\left(\frac{v_j(k)}{u_j(k)}\right)$$ ; and

iii) determining the wind direction $\hat{\theta}$ by means of the following equation: $$\hat{\theta}(k) = \sum_{j=-2}^{2} w_j \theta_j(k)$$ with $\omega_j$ weightings of said stochastic realizations.

6. Method for determining wind direction according to Claims 3 and 5, wherein the standard deviation $\hat{\sigma}$ of said wind direction $\hat{\theta}$ is determined by means of the following equation:

$$\hat{\sigma}(k) = \sqrt{\sum_{j=-2}^{2} w_j \left(\theta_j(k) - \hat{\theta}(k)\right)^2} .$$

7. Method for determining wind direction according to either of Claims 5 and 6, wherein said weightings $\omega_j$ are defined in the following way:

$$\begin{cases} w_0 = \frac{1}{3}, \\ w_j = \frac{1}{6}, \end{cases} \forall_j = \{-2, -1, 1, 2\} .$$

8. Method for controlling a wind turbine (1) equipped with a lidar sensor (2), **characterized in that** the following steps are implemented:

   a) determining said wind direction upstream of the wind turbine (1) by means of the method according to one of the preceding claims; and
   b) controlling said wind turbine (1) depending on said wind direction upstream of said wind turbine (1).

9. Computer program product, **characterized in that** it comprises code instructions arranged to implement the steps of a method according to one of the preceding claims, when the program is executed on a processing unit of said lidar sensor (2).

10. Wind-turbine lidar sensor (2), **characterized in that** it comprises a processing unit implementing a method according to one of Claims 1 to 8.

11. Wind turbine (1), **characterized in that** it comprises a lidar sensor (2) according to Claim 10, said lidar sensor (2) preferably being placed on the nacelle of said wind turbine (1) or in the nose cone of said wind turbine.

[Fig 1]

[Fig 2]

[Fig 3]

[Fig 4]

[Fig 5]

## RÉFÉRENCES CITÉES DANS LA DESCRIPTION

**Documents brevets cités dans la description**

- FR 3013777
- US 2015145253 A
- WO 2018234409 A
- FR 3068139
- FR 2976630 A1
- US 20120321463 A

**Littérature non-brevet citée dans la description**

- **I. ARASARATNAM.** Cubature kalman filtering theory & applications. *Ph.D. dissertation,* 2009